Europäisches Patentamt

European Patent Office

Office européen des brevets

(19)

(11) **EP 1 321 752 A1**

(12) ## DEMANDE DE BREVET EUROPEEN

(43) Date de publication:
**25.06.2003 Bulletin 2003/26**

(51) Int Cl.7: **G01K 15/00**, G01K 3/00

(21) Numéro de dépôt: **02028475.8**

(22) Date de dépôt: **19.12.2002**

(84) Etats contractants désignés:
**AT BE BG CH CY CZ DE DK EE ES FI FR GB GR
IE IT LI LU MC NL PT SE SI SK TR**
Etats d'extension désignés:
**AL LT LV MK RO**

(30) Priorité: **21.12.2001 FR 0116765**

(71) Demandeur: **Stmicroelectronics SA
F-92120 Montrouge (FR)**

(72) Inventeurs:
- **Marinet, Fabrice
  13790 Chateauneuf le Rouge (FR)**
- **Duval, Benjamin
  83470 Saint Maximin (FR)**

(74) Mandataire: **Marchand, André
  OMNIPAT,
  24 Place des Martyrs de la Résistance
  13100 Aix-en-Provence (FR)**

(54) **Capteur de température à seuil comprenant des moyens de test à température ambiante**

(57) La présente invention concerne un capteur de température intégré (21) délivrant des signaux (S1, S2) de détection de dépassement de seuils de température, comprenant des moyens (MC1, CP1) de détection d'un premier seuil de température présentant un premier seuil de détection, et des moyens (MC1, CP2) de détection d'un second seuil de température présentant un second seuil de détection. Selon l'invention, le capteur comprend des moyens (MC1, MX1, CP1) de détection d'un troisième seuil de température compris entre les premier et second seuils de température, présentant un troisième seuil de détection lié au premier seuil de détection de manière qu'une déviation du premier seuil de détection entraîne une déviation correspondante du troisième seuil de détection, et des moyens (MC1, MX2, CP2) de détection d'un quatrième seuil de température compris entre les premier et second seuils de température, présentant un quatrième seuil de détection lié au second seuil de détection. Avantage : contrôle des premier et second seuils de détection à température ambiante.

**Fig. 8**

## Description

La présente invention concerne les capteurs de température intégrés et plus particulièrement les capteurs de température à seuil.

Des capteurs de température du type précité sont fréquemment prévus dans les circuits intégrés, afin de détecter le dépassement éventuel de températures limites de fonctionnement prévues par le constructeur, par exemple +100°C et -30°C. A cet effet, de tels capteurs de température délivrent des signaux de détection qui changent de valeur lorsque l'une de ces températures est dépassée, respectivement par valeurs supérieures et par valeurs inférieures.

Afin de détecter ces seuils critiques de température, les capteurs de température intégrés utilisent les propriétés des diodes ou des transistors bipolaires pour générer des courants ou des tensions proportionnels à la température ainsi que des courants ou des tensions de référence ne variant pas ou variant peu avec la température. Une comparaison des tensions ou courants variant avec la température et des tensions ou courants de référence permet de détecter le dépassement des seuils critiques de température.

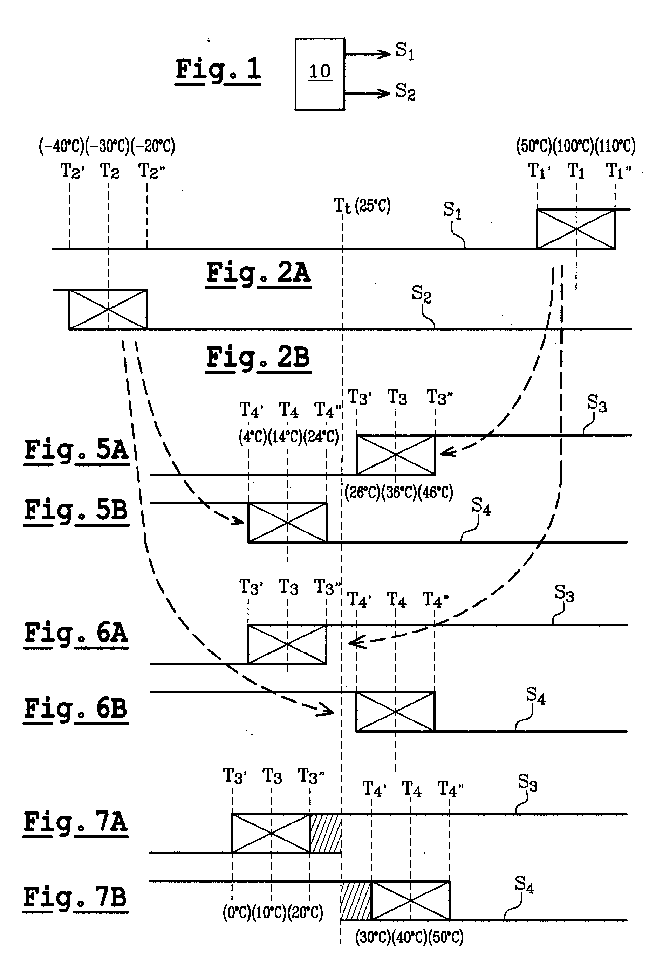

La figure 1 représente schématiquement, sous la forme d'un bloc, un capteur de température intégré 10 du type précité. Le capteur de température 10 délivre deux signaux S1 et S2 dont la valeur dépend de la température du capteur, c'est-à-dire la température de la plaquette de silicium sur laquelle le capteur est intégré (non représentée). Les figures 2A et 2B représentent des exemples de signaux Si et S2. Le signal Si est par exemple à 0 tant qu'un seuil T1 n'est pas atteint, par exemple +100°C, et passe à 1 lorsque le seuil T1 est dépassé. Le signal S2 est par exemple à 0 tant qu'un seuil T2 n'est pas atteint, par exemple -30°C, et passe à 1 lorsque le seuil T2 est dépassé (par valeurs inférieures). En raison, d'une part, des erreurs de fabrication intervenant lors de l'intégration du capteur, dues aux dispersions du procédé de fabrication lors de l'implantation des composants électroniques, et, d'autre part, des variations de la tension d'alimentation du capteur, les seuils de détection des températures T1 et T2 peuvent varier dans une large gamme de valeurs. On définit ainsi des marges de tolérance T1'-T1" et T2'-T2" pour lesquelles le capteur de température est considéré comme valide. Pour un seuil T1 de 100°C, les températures T1' et T1" sont par exemple de 90°C et 110°C, soit une marge de tolérance de ±10°C. Pour un seuil T2 de -30°C, les températures T2' et T2" sont par exemple de -40°C et -20°C.

Il est donc souhaitable en pratique que les seuils de détection d'un tel capteur de température soient vérifiés. Une telle vérification peut par exemple intervenir lors des étapes de test électrique du circuit intégré dans lequel le capteur est incorporé, et permet de s'assurer que les seuils de détection correspondent bien aux températures T1 et T2 ou, à tout le moins, qu'ils entrent dans les marges de tolérance T1'-T1" et T2'-T2". Or, la vérification des seuils de détection nécessite au minimum de porter la plaquette de silicium aux températures T1 et T2, qui sont généralement très éloignées l'une de l'autre, l'une étant très élevée et l'autre très basse, afin de vérifier que les signaux Si et S2 changent de valeur. De plus, la vérification que les seuils de détection se trouvent bien dans les marges de tolérance T1'-T1" et T2'-T2" nécessite de prévoir au moins quatre températures de test T1', T1", T2', T2".

Ainsi, le test d'un capteur de température présent dans un circuit intégré s'avère en pratique complexe et coûteux à mettre en oeuvre.

La présente invention vise à pallier cet inconvénient.

Plus particulièrement, un objectif de la présente invention est de permettre le test à température ambiante des seuils de détection d'un capteur de température du type précité.

Cet objectif est atteint par un capteur de température intégré délivrant des signaux de détection de dépassement de seuils de température, comprenant des moyens de détection d'un premier seuil de température présentant un premier seuil de détection, et des moyens de détection d'un second seuil de température présentant un second seuil de détection, le capteur comprenant en outre des moyens de détection d'un troisième seuil de température compris entre les premier et second seuils de température, présentant un troisième seuil de détection lié au premier seuil de détection de manière qu'une déviation du premier seuil de détection entraîne une déviation correspondante du troisième seuil de détection, des moyens de détection d'un quatrième seuil de température compris entre les premier et second seuils de température, présentant un quatrième seuil de détection lié au second seuil de détection de manière qu'une déviation du second seuil de détection entraîne une déviation correspondante du quatrième seuil de détection, les troisième et quatrième seuils de température délimitant une fenêtre de températures pour le test du capteur de température en vue de détecter une déviation des premier et second seuils de détection.

Selon un mode de réalisation, le premier seuil de température est supérieur au second seuil de température tandis que le troisième seuil de température est inférieur au quatrième seuil de température.

Selon un mode de réalisation, le premier seuil de détection est lié au second seuil de détection, de sorte qu'une déviation du premier seuil de détection entraîne une déviation correspondante du second seuil de détection, et réciproquement.

Selon un mode de réalisation, le capteur comprend des moyens pour délivrer un premier signal variant avec la température selon une première loi de variation, un second signal variant avec la température selon une second loi de variation, un troisième signal variant avec la température selon une troisième loi de variation, un quatrième signal variant avec la température selon une quatrième loi de variation, de telle manière qu'une déviation du premier signal implique une déviation correspondante du troisième signal et qu'une déviation du second signal implique une déviation correspondante du quatrième signal, des moyens pour délivrer au moins un signal de référence ne variant pas ou variant peu avec la température, et des moyens pour comparer chacun des signaux variant avec la température avec le signal de référence, et délivrer des signaux de détection d'un dépassement du premier, second, troisième et quatrième seuils de température.

Selon un mode de réalisation, le capteur comprend une entrée pour recevoir un signal de sélection de seuil de détection ; des moyens pour sélectionner le premier ou le troisième signal variant avec la température, selon la valeur du signal de sélection, comparer le signal sélectionné avec le signal de référence et délivrer un signal de détection d'un dépassement du premier ou du troisième seuil de température ; et des moyens pour sélectionner le second ou le quatrième signal variant avec la température, selon la valeur du signal de sélection, comparer le signal sélectionné avec le signal de référence et délivrer un signal de détection d'un dépassement du second ou du quatrième seuil de température.

Selon un mode de réalisation, le capteur comprend une entrée pour recevoir un signal de sélection de seuil de détection, des moyens pour délivrer le premier ou le troisième signal variant avec la température, selon la valeur du signal de sélection, des moyens pour délivrer le second ou le quatrième signal variant avec la température, selon la valeur du signal de sélection, des moyens pour comparer le signal délivré avec le signal de référence et délivrer un signal de détection d'un dépassement du premier ou du troisième seuil de température, et des moyens pour comparer le signal délivré avec le signal de référence et délivrer un signal de détection d'un dépassement du second ou du quatrième seuil de température.

Selon un mode de réalisation, le capteur comprend des moyens pour délivrer un premier signal de référence ne variant pas ou variant peu avec la température, un second signal de référence ne variant pas ou variant peu avec la température, un troisième signal de référence ne variant pas ou variant peu avec la température, un quatrième signal de référence ne variant pas ou variant peu avec la température, de telle manière qu'une déviation du premier signal implique une déviation correspondante du troisième signal et qu'une déviation du second signal implique une déviation correspondante du quatrième signal, des moyens pour délivrer au moins un signal variant avec la température, et des moyens pour comparer chacun des signaux de référence avec le signal variant avec la température, et délivrer des signaux de détection d'un dépassement du premier, second, troisième et quatrième seuils de température.

Selon un mode de réalisation, le capteur comprend une entrée pour recevoir un signal de sélection de seuil de détection, des moyens pour sélectionner le premier ou le troisième signal de référence, selon la valeur du signal de sélection, comparer le signal sélectionné avec le signal variant avec la température et délivrer un signal de détection d'un dépassement du premier ou du troisième seuil de température, et des moyens pour sélectionner le second ou le quatrième signal de référence, selon la valeur du signal de sélection, comparer le signal sélectionné avec le signal variant avec la température et délivrer un signal de détection d'un dépassement du second ou du quatrième seuil de température.

Selon un mode de réalisation, le capteur comprend une entrée pour recevoir un signal de sélection de seuil de détection, des moyens pour délivrer le premier ou le troisième signal de référence, selon la valeur du signal de sélection, des moyens pour délivrer le second ou le quatrième signal de référence, selon la valeur du signal de sélection, des moyens pour comparer le signal délivré avec le signal variant avec la température et délivrer un signal de détection d'un dépassement du premier ou du troisième seuil de température, et des moyens pour comparer le signal délivré avec le signal variant avec la température et délivrer un signal de détection d'un dépassement du second ou du quatrième seuil de température.

Selon un mode de réalisation, deux moyens de détection présentent des seuils de détection liés lorsqu'ils présentent au moins un élément électrique commun intervenant dans la détection des seuils de température, tel une source de courant, une résistance électrique ou un transistor.

Selon un mode de réalisation, la fenêtre de températures est centrée sur une température de l'ordre de 20 à 30°C.

Selon un mode de réalisation, le premier seuil de température est supérieur à 50°C, le second seuil de température est inférieur à 0°C, et les troisième et quatrième seuils de température sont compris entre 0°C et 50°C.

La présente invention concerne également un procédé pour tester des seuils de détection d'un capteur de température intégré délivrant des signaux de détection d'un dépassement d'au moins deux seuils de température, le capteur de température présentant un premier seuil de détection d'un premier seuil de température et un second seuil de détection d'un second seuil température, le procédé comprenant les étapes consistant à décaler le premier seuil de détection pour obtenir un troisième seuil de détection d'un troisième seuil de température compris entre le premier et le second seuils de température, de manière que le troisième seuil de détection soit lié au premier seuil de détection et qu'une déviation du premier seuil de détection entraîne une déviation correspondante du troisième seuil de détection, décaler le second seuil de détection pour obtenir un quatrième seuil de détection d'un quatrième seuil de température compris entre les premier et second seuils de température, de manière que le quatrième seuil de détection soit lié au second seuil de détection et qu'une déviation du second seuil de détection entraîne une déviation correspondante du quatrième seuil de détection, et observer des signaux de détection de seuil délivrés par le capteur de température, en se plaçant dans une fenêtre de températures comprise entre les troisième et quatrième seuils de température.

Selon un mode de réalisation, le capteur de température est agencé de manière que le premier seuil de température soit supérieur au second seuil de température et que le troisième seuil de température soit inférieur au quatrième seuil de température.

Selon un mode de réalisation, on lie le premier et le second seuils de détection de manière qu'une déviation du premier seuil de détection entraîne une déviation correspondante du second seuil de détection, et réciproquement.

Selon un mode de réalisation, on teste le capteur de température à une température unique.

Selon un mode de réalisation, la fenêtre de températures est centrée sur une température de l'ordre de 20 à 30°C.

Selon un mode de réalisation, le premier seuil de température est supérieur à 50°C, le second seuil température est inférieur à 0°C, et les troisième et quatrième seuils de température sont compris entre 0°C et 50°C.

Selon un mode de réalisation, l'étape consistant à décaler le premier seuil de détection vers le troisième seuil de détection comprend la prévision, dans le capteur de température, de moyens de détection du premier seuil de température présentant un premier seuil de détection, et de moyens de détection du troisième seuil de température présentant un troisième seuil de détection lié au premier seuil de détection de manière qu'une déviation du premier seuil de détection entraîne une déviation correspondante du troisième seuil de détection, et l'utilisation des moyens de détection du troisième seuil de température pendant le test du capteur de température, et l'étape consistant à décaler le second seuil de détection vers le quatrième seuil de détection comprend la prévision, dans le capteur de température, de moyens de détection du second seuil de température présentant un second seuil de détection, et de moyens de détection du quatrième seuil de température présentant un quatrième seuil de détection lié au second seuil de détection de manière qu'une déviation du second seuil de détection entraîne une déviation correspondante du quatrième seuil de détection, et l'utilisation des moyens de détection du quatrième seuil de température pendant le test du capteur de température.

Selon un mode de réalisation, on lie les seuils de détection de deux moyens de détection en prévoyant dans les moyens de détection au moins un élément électrique commun intervenant dans la détection des seuils de température, tel une source de courant, une résistance électrique ou un transistor.

Selon un mode de réalisation, on prévoit dans le capteur de température deux sorties multiplexées pilotées par un signal de sélection de seuil, délivrant respectivement un signal de détection d'un dépassement du premier seuil ou du troisième seuil, et un signal de détection d'un dépassement du second seuil ou du quatrième seuil.

Selon un mode de réalisation, l'étape consistant à décaler un seuil de détection comprend le fait de modifier la valeur d'au moins un paramètre électrique dans le capteur de température, tel un courant de polarisation ou une résistance électrique.

Ces objets, caractéristiques et avantages ainsi que d'autres de la présente invention seront exposés plus en détail dans la description suivante du procédé de l'invention et de divers exemples de réalisation de capteurs de température selon l'invention, faite à titre non limitatif en relation avec les figures jointes parmi lesquelles :

- la figure 1 précédemment décrite représente un capteur de température à seuil de type classique,
- les figures 2A et 2B précédemment décrites représentent deux signaux de détection délivrés par le capteur de température de la figure 1,
- la figure 3 représente schématiquement un premier type de capteur de température à seuil selon l'invention,
- la figure 4 représente schématiquement un second type de capteur de température selon l'invention,
- les figures 5A et 5B représentent des signaux de détection décalés délivrés par un capteur de température à seuil selon l'invention, et illustrent un premier exemple de mise en oeuvre du procédé selon l'invention,
- les figures 6A et 6B représentent des signaux de détection décalés délivrés par un capteur de température selon l'invention, et illustrent un second exemple de mise en oeuvre du procédé selon l'invention,
- les figures 7A et 7B représentent des signaux de détection décalés délivrés par un capteur de température selon l'invention, et illustrent un troisième exemple de mise en oeuvre du procédé selon l'invention,
- la figure 8 représente un premier mode de réalisation d'un capteur de température du type représenté en figure 3,
- la figure 9 représente un premier mode de réalisation d'un capteur de température du type représenté en figure 4,
- la figure 10 représente un circuit de mesure présent dans un capteur de température selon l'une des figures 8 ou 9,
- la figure 11 représente une variante de réalisation d'un étage de mesure présent dans le circuit de mesure de la figure 10,

- la figure 12 représente une autre variante de réalisation d'un étage de mesure présent dans le circuit de mesure de la figure 10,

- la figure 13 représente un second mode de réalisation d'un capteur de température du type représenté en figure 3,

- la figure 14 représente un mode de réalisation d'un étage de mesure présent dans le capteur de température de la figure 13,

- la figure 15 représente un autre mode de réalisation d'un étage de mesure présent dans le capteur de température de la figure 13,

- la figure 16 représente un exemple de réalisation d'un circuit de polarisation présent dans un capteur de température selon l'invention,

- la figure 17 représente un troisième mode de réalisation d'un capteur de température du type représenté en figure 3,

- la figure 18 représente un second mode de réalisation d'un capteur de température du type représenté en figure 4,

- la figure 19 représente un quatrième mode de réalisation d'un capteur de température du type représenté en figure 3, et

- la figure 20 illustre une application d'un capteur de température selon l'invention.

Note lexicographique préliminaire : dans ce qui suit, on désignera par "seuil de détection d'une température X" un seuil de détection interne d'un capteur de température, prévu pour correspondre à la détection d'une température X, mais susceptible en pratique de présenter une déviation et ne plus correspondre à cette température. Dans un souci de simplification du langage, on pourra également désigner par "seuil de détection X" le seuil de détection de la température X, et par "seuil X" le seuil de détection de la température X ou le seuil de température X, selon le contexte.

La figure 3 représente schématiquement, sous forme de bloc, un capteur de température intégré 20 selon l'invention. Le capteur de température présente des sorties OUT1 et OUT2 qui délivrent classiquement, pendant un mode de fonctionnement normal du capteur, deux signaux de détection Si et S2 déjà décrits au préambule et représentés sur les figures 2A et 2B. Ainsi, le signal Si change de valeur et passe par exemple à 1 lorsqu'un seuil T1 est dépassé par valeurs supérieures, par exemple un seuil de +100°C. Le signal S2 change de valeur et passe par exemple à 1 lorsqu'un seuil T2 est dépassé par valeurs inférieures, par exemple un seuil de -30°C.

Selon l'invention, le capteur de température 20 présente une entrée recevant un signal TST ("TEST"), permettant de faire basculer le capteur de température dans un mode de fonctionnement spécial ou "mode test" dans lequel les sorties OUT1, OUT2 ne délivrent plus les signaux Si et S2 mais délivrent des signaux S3 et S4 prévus pour détecter des seuils de température décalés T3, respectivement T4, qui sont proches l'un de l'autre et proches d'une température de test Tt. La température de test Tt est de préférence la température ambiante d'une salle de test, soit généralement 25°C, en considérant que des circuits intégrés à tester se trouvent à cette température.

Selon un aspect essentiel de l'invention, le seuil de détection de la température T3 est lié au seuil de détection de la température T1 et le seuil de détection de la température T4 est lié au seuil de détection de la température T2, de sorte qu'une déviation du seuil de détection de la température T1 se traduit par une déviation correspondante du seuil de détection de la température T3, et qu'une déviation du seuil de détection de la température T2 se traduit par une déviation correspondante du seuil de détection de la température T4.

De préférence, les seuils de détection des températures T1 et T2 sont également liés de sorte qu'une déviation dans la détection de l'une quelconque des températures T1 ou T2 implique une déviation correspondante dans la détection des autres températures T2 ou T1, T3 et T4.

Il apparaîtra dans ce qui suit que la prévision de quatre seuils de détection liés permet de tester les seuils de détection des températures T1 et T2 avec une température de test unique. Il apparaîtra également dans ce qui suit que des seuils de détection qui sont liés en termes de déviation sont aisés à obtenir en pratique, par la prévision de moyens de mesure de température ayant des éléments en commun, notamment des sources de courant et/ou des sources de tension, des résistances, des transistors,...

Les figures 5A et 5B, 6A et 6B, 7A et 7B illustrent trois exemples de mise en oeuvre du procédé selon l'invention, dans lesquels on considère à titre d'exemple non limitatif que les seuils de température T1 et T2 valent respectivement +100°C et -30°C et que le capteur doit être testé à une température Tt de l'ordre de 25°C.

Sur les figures 5A et 5B, le signal S3 présente un seuil de détection T3 de 36°C correspondant au décalage du seuil T1 en direction de la température de test Tt. Le seuil T3 est choisi de manière qu'une fourchette de températures T3'-T3" correspondant à une marge de tolérance déterminée, par exemple la fourchette 26°C-46°C correspondant à une tolérance de ±10°, se trouve en bordure droite de la température Tt. Par ailleurs, le signal S4 présente un seuil de détection T4 de 14°C correspondant à un décalage du seuil T2 en direction de la température Tt choisi de manière qu'une fourchette de températures T4'-T4" correspondant à une marge de tolérance déterminée, par exemple 4°C-24°C, se trouve en bordure gauche de la température de test.

Les avantages du procédé de l'invention dans cet exemple sont les suivants. Tout d'abord, si les seuils T1 et T3, respectivement T2 et T4, sont liés, mais les seuils T1 et T2 ne le sont pas, une séquence de test faite à la température Tt, consistant à observer les signaux S3 et S4 (qui doivent être à 0), permet de détecter un décalage à gauche du seuil T3 en dehors de la marge de tolérance (signal S3 à 1) ou un décalage à droite du seuil T4 en dehors de la marge de tolérance (signal S4 à 1). Les seuils T1 et T3, respectivement T2 et T4 étant liés, on en déduit que le ou les seuils T1, T2 du capteur ne se trouvent pas dans la marge de tolérance. Par contre, la détection d'un décalage à droite du seuil T3 ou d'un décalage à gauche du seuil T4 en dehors de la marge de tolérance, nécessite d'avoir recours à deux autres températures de test, respectivement T4' (+4°C) et T3" (+46°C), pour encadrer la zone de test.

Si par contre les seuils T1 et T2 sont liés, une seule séquence de test faite à la température Tt, consistant à observer les signaux S3 et S4 (qui doivent être à 0), permet simultanément de détecter un décalage à gauche ou à droite du seuil T3 en dehors de la marge de tolérance (signal S3 à 1) ou un décalage à droite du seuil T4 en dehors de la marge de tolérance (signal S4 à 1). La séquence de test à la température Tt permet ainsi de vérifier simultanément que les seuils T1 et T2 se trouvent dans les marges de tolérance T1'-T1" et T2'-T2". Ceci se comprend aisément sur les figures 2A, 2B, 5A et 5B en imaginant que les quatre marges de tolérance T1'-T1" T2'-T2", T3'-T3", T4'-T4" se décalent ensemble vers la droite ou vers la gauche (les seuils de détection T1, T2, T3 et T4 étant liés). Un décalage collectif, aussi petit soit-il, aura pour effet de faire changer la valeur d'un des signaux de test S3 ou S4 par rapport à la valeur attendue (ici "0").

Sur les figures 6A et 6B, les seuils de détection décalés T3 et T4 sont croisés : le signal S3 présente un seuil T3 de 14°C, correspondant au décalage du seuil T1 à gauche de la température de test Tt et le signal S4 présente un seuil de détection T4 de 36°C, correspondant au décalage du seuil T2 à droite de la température Tt. Le seuil T3 est choisi de manière qu'une fourchette de températures T3'-T3" correspondant à une marge de tolérance déterminée, par exemple la fourchette 4°C-24°C correspondant à une tolérance de ±10°, se trouve en limite gauche de la température Tt. Le seuil T4 est choisi de manière que la fourchette de températures T4'-T4" correspondant à la marge de tolérance déterminée, par exemple la fourchette 26°C-46°C, se trouve en limite droite de la température Tt.

Cet exemple de mise en oeuvre offre les mêmes avantages que celui décrit ci-dessus. Un autre avantage dû au fait que les seuils de détection sont croisés, est que les signaux S3 et S4 sont à 1 lorsque le capteur se trouve à la température de test Tt, ce qui permet de vérifier que les moyens de commutation de signaux du capteur fonctionnent correctement. Ainsi, si les seuils de détection T1 et T3, respectivement T2 et T4 sont liés, mais que les seuils de détection T1 et T2 ne le sont pas, une seule séquence de test faite à la température Tt, consistant à observer les valeurs des signaux S3 et S4 (qui doivent maintenant être à 1), permet de détecter un décalage à droite du seuil T3 en dehors de la marge de tolérance (signal S3 à 0) ou un décalage à gauche du seuil T4 en dehors de la marge de tolérance (signal S4 à 0). Par contre, la détection d'un décalage à gauche du seuil T3 et un décalage à droite du seuil T4, en dehors de la marge de tolérance, nécessite la prévision de deux autres températures de test, respectivement T3' (+4°C) et T4" (+46°C). Si par contre les seuils T1 et T2 sont liés, une seule séquence de test faite à la température Tt permet de détecter un décalage à gauche ou à droite du seuil T3 en dehors de la marge de tolérance (signal S3 à 0) ou un décalage à droite du seuil T4 en dehors de la marge de tolérance (signal S4 à 0), ce qui permet de vérifier en une seule étape que les seuils T1 et T2 se trouvent dans les marges de tolérance T1'-T1" et T2'-T2".

Sur les figures 7A et 7B, les seuils de détection T3 et T4 sont toujours croisés mais présentent un écart supplémentaire vers la gauche (en direction des températures négatives), respectivement vers la droite (en direction des températures positives). Par exemple, T3 est égal à 10°C et T4 égal à 40°C, la marge de tolérance T3'-T3" est égale à 0°C-10°C et la marge de tolérance T4'-T4" égale à 30°C-50°C. On dispose ici d'un degré de liberté supplémentaire sur le choix de la température de test Tt, qui peut se trouver entre les températures T3" et T4', soit ici entre 20°C et 30°C. Le capteur peut dans ce cas être testé avec un moindre contrôle de la température de la salle de test, une température de test comprise entre 20°C et 30°C permettant de vérifier simultanément que les seuils T1 et T2 se trouvent dans les marges de tolérance T1'-T1" et T2'-T2" (en négligeant la marge de tolérance T3"-T4').

On décrira maintenant divers exemples de réalisation de capteurs de température selon l'invention. Notons préalablement que, bien qu'il soit suffisant, pour mettre en oeuvre le procédé de l'invention, qu'un capteur de température délivre les signaux S3 et S4 à la place des signaux S1 et S2 pendant la phase de test, un capteur selon l'invention peut également présenter deux sorties supplémentaires pour délivrer les signaux S3 et S4. Ainsi, le capteur de température 30 représenté en figure 4 présente deux sorties OUT1 et OUT2 délivrant les signaux S1 et S2 et deux sorties OUT3 et OUT4 délivrant des signaux S3 et S4 ayant des seuils de détection liés à ceux des signaux S1 et S2. Les sorties OUT3, OUT4 et les signaux S3, S4 sont utilisés pendant les phases de test du capteur, à la place des sorties OUT1, OUT2 et des signaux S1, S2. Une telle "utilisation" des signaux S3, S4 à la place des signaux S1 et S2 est équivalente, en termes de procédé, à une transformation du signal S1 en signal S3 et à une transformation du signal S2 en signal S4, les deux modes de réalisation correspondant à un décalage des seuils de détection T1 et T2 pour former les seuils de détection rapprochés T3 et T4.

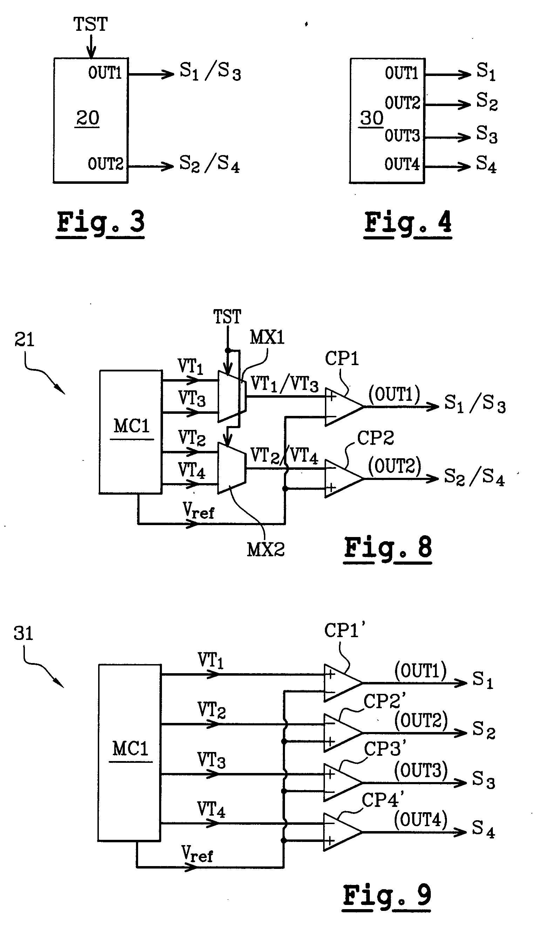

La figure 8 représente un exemple de réalisation d'un capteur de température 21 du type représenté en figure 3, présentant deux sorties OUT1, OUT2 délivrant les signaux S1, S2 ou S3, S4 selon la valeur du signal TST. Le capteur 21 comprend un circuit de mesure MC1 délivrant quatre tensions VT1, VT2, VT3, VT4 variant proportionnellement avec la température, selon des coefficients de proportionnalité différents, ainsi qu'une tension de référence Vref indépendante de la température. Les tensions VT1 et VT3 sont appliquées sur les entrées d'un multiplexeur analogique MX1 piloté par le signal TST, et les tensions VT2 et VT4 sont appliquées sur les entrées d'un multiplexeur analogique MX2 également piloté par le signal TST. La sortie du multiplexeur MX1 délivre la tension VT1 ou la tension VT3 selon la valeur du signal TST, et est appliquée sur l'entrée positive d'un comparateur CP1 dont l'entrée négative reçoit la tension Vref et dont la sortie forme la sortie OUT1 du capteur. La sortie du multiplexeur MX2 délivre la tension VT2 ou la tension VT4 selon la valeur du signal TST, et est appliquée sur l'entrée négative d'un comparateur CP2 dont l'entrée positive reçoit la tension Vref et dont la sortie forme la sortie OUT2 du capteur.

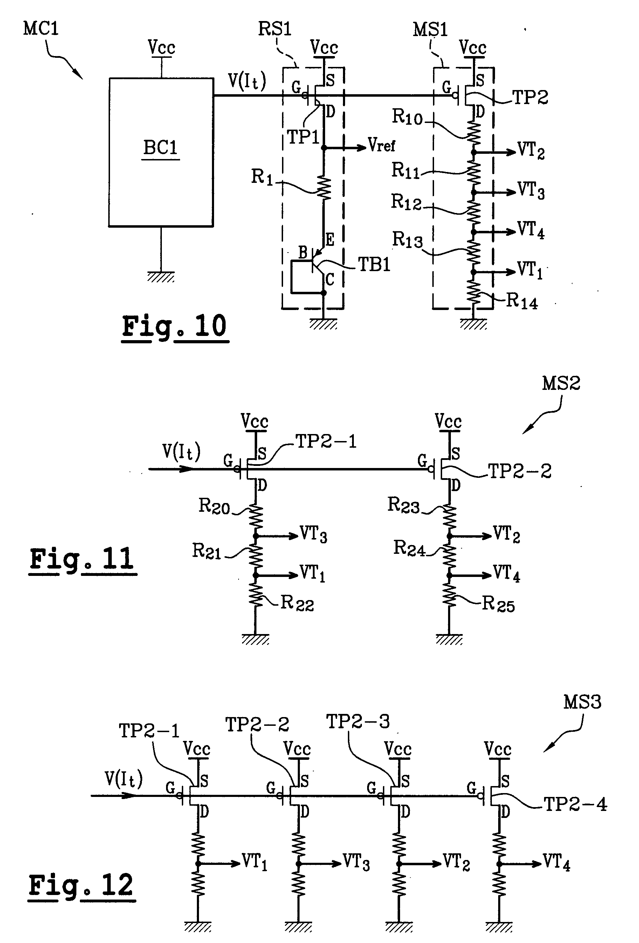

La figure 9 représente un exemple de réalisation d'un capteur de température 31 du type représenté en figure 4, présentant quatre sorties OUT1, OUT2, OUT3, OUT4 délivrant respectivement les signaux Si, S2, S3, S4. Le capteur 21 comprend le circuit le mesure MC1 susmentionné et quatre comparateurs CP1', CP2', CP3', CP4'. Le comparateur CP1' reçoit sur son entrée positive la tension VT1, sur son entrée négative la tension Vref, et délivre le signal Si. Le comparateur CP2' reçoit sur son entrée négative la tension VT2, sur son entrée positive la tension Vref, et délivre le signal S2. Le comparateur CP3' reçoit sur son entrée positive la tension VT3, sur son entrée négative la tension Vref, et délivre le signal S3. Le comparateur CP4' reçoit sur son entrée négative la tension VT4, sur son entrée positive la tension Vref, et délivre le signal S4.

La figure 10 représente un exemple de réalisation du circuit de mesure MC1. Celui-ci comprend un circuit de polarisation BC1, un étage de référence RS1 délivrant la tension Vref, et un étage de mesure MS1 délivrant les tensions VT1, VT2, VT3 et VT4. Le circuit BC1 est alimenté électriquement par une tension Vcc, et délivre une tension V(It) prévue pour être appliquée à la grille d'un transistor PMOS afin de former une source de courant imposant un courant It proportionnel à la température T, du type It = $\alpha$T, $\alpha$ étant une constante.

L'étage de référence RS1 comprend un transistor PMOS TP1 recevant la tension Vcc sur sa source S et la tension V(It) sur sa grille G. Le drain D de ce transistor est relié à une extrémité d'une résistance R1 dont l'autre extrémité est reliée à l'émetteur E d'un transistor bipolaire TB1 de type PNP ayant sa base et son collecteur connectés à la masse (diode). La tension Vref est prélevée sur le noeud de connexion du drain D du transistor TP1 et de la résistance R1. L'étage RS1 étant traversé par le courant It, la résistance R1 présente une valeur choisie de manière que la tension Vref soit indépendante de la température, avec :

$$Vref = R1*It + Vbe(T) = R1*\alpha T + Vbe(T) = Constante$$

Vbe(T) étant la tension émetteur-base du transistor TB1, dont les variations en fonction de la température sont compensées par les variations du terme R1*$\alpha$T.

L'étage MS1 comprend un transistor PMOS TP2 recevant sur sa source S la tension Vcc et sur sa grille G la tension V(It), les transistors TP2 et TP1 étant ainsi agencés en miroir de courant. Le drain D du transistor TP2 est relié à la masse par l'intermédiaire de cinq résistances en série R10, R11, R12, R13, R14, la cathode de la résistance R14 étant connectée à la masse. La tension VT1 est prélevée sur l'anode de la résistance R14, la tension VT2 est prélevée sur l'anode de la résistance R11, la tension VT3 est prélevée sur l'anode de la résistance R12, et la tension VT4 est prélevée sur l'anode de la résistance R13.

Il apparaîtra clairement à l'homme de l'art que les seuils de détection des températures T1 à T4 sont liés. Une déviation d'un point de fonctionnement du circuit de mesure MC1 entraîne une déviation correspondante des tensions VT1, VT2, VT3 et VT4 et par conséquent des seuils de détection. Une déviation de la tension Vref a un effet identique sur les seuils de détection, en agissant sur les seuils de déclenchement des comparateurs. En pratique une déviation du point de fonctionnement peut être due à une variation de la tension Vcc, une variation de la tension V(It), une dispersion technologique du rapport W/L (largeur sur longueur de grille) d'un transistor TP1 ou TP2, ou encore une dispersion technologique de la résistivité par carré SQR du matériau formant les résistances R1, R10 à R14.

Il convient de noter qu'une déviation d'un seuil de détection T1, T2 entraîne ici une déviation correspondante du seuil de détection décalé T3, T4 lorsque cette déviation est exprimée en pourcentage. Ainsi, par exemple, le seuil de détection de la température T1, que l'on désignera ST1, est défini par l'égalité suivante :

$$Vref = VT1$$

soit :

$$Vref = R14*I$$

soit :

$$Vref = R14*\alpha*ST1$$

soit :

$$ST1 = Vref/R14*\alpha$$

De même, le seuil de détection de la température T3, que l'on désignera ST3, est défini par l'égalité suivante :

$$Vref = VT3$$

soit :

$$Vref = (R12+R13+R14)*I$$

soit :

$$Vref = (R12+R13+R14)*\alpha*ST3$$

soit :

$$ST3 = Vref/(R12+R13+R14)*\alpha$$

Le rapport entre les deux seuils vaut donc :

$$ST1/ST3 = Vref/Vref * (R12+R13+R14)/R14 * \alpha/\alpha$$

Si l'un des paramètres Vref, $\alpha$, SQR (résistance parcarré) varie et entraîne une déviation des seuils ST1 et ST3, le rapport entre les seuils reste le même. Par exemple une déviation de 5% de ST1 entraîne une déviation de 5% de ST3.

On a proposé dans ce qui précède, dans un souci de simplicité, de prévoir pour les seuils décalés T3 et T4 des marges de tolérance qui sont de même valeur que les marges de tolérance des seuils utiles T1 et T2. Afin de prendre en compte l'observation ci-dessus, il est possible en pratique de prévoir une dilatation ou une contraction homothétique des marges de tolérance définies pour les seuils T1 et T2, au moment où l'on détermine les marges de tolérance des seuils T3 et T4.

D'autre part, le terme "correspondant" dans l'expression "déviation correspondante" qui est utilisée dans la présente description et dans les revendications, doit être interprété à la lumière de l'observation ci-dessus.

La figure 11 représente une variante MS2 de l'étage de mesure. L'étage MS2 comprend ici deux transistors PMOS TP2-1, TP2-2 recevant la tension Vcc sur leurs sources S et la tension V(It) sur leurs grilles G. Le drain D du transistor TP2-1 est relié à la masse par l'intermédiaire de trois résistances en série R20, R21, R22, la cathode de la résistance R22 étant connectée à la masse. La tension VT1 est prélevée sur l'anode de la résistance R22 et la tension VT3 est prélevée sur l'anode de la résistance R21. Le drain D du transistor TP2-2 est relié à la masse par l'intermédiaire de trois résistances en série R23, R24, R25, la cathode de la résistance R25 étant connectée à la masse. La tension VT2 est prélevée sur l'anode de la résistance R24 et la tension VT4 est prélevée sur l'anode de la résistance R25.

Les seuils de détection des températures T1 à T4 sont également liés dans ce mode de réalisation, en cas de variation des paramètres Vref, $\alpha$, SQR, à moins d'une erreur isolée portant sur la valeur de l'une des résistances, peu probable en pratique. Toutefois, dans ce cas, les tensions VT1 et VT3 demeurent liées, et par conséquent les seuils de détection des températures T1 et T3. Les tensions VT2 et VT4 restent également liées, et par conséquent les seuils de température T2 et T4.

La figure 12 représente une autre variante MS3 de l'étage de mesure. L'étage MS3 comprend ici quatre transistors PMOS TP2-1, TP2-2, TP2-3, TP2-4 recevant chacun la tension Vcc sur leurs sources S et la tension V(It) sur leurs grilles G. Le drain D du transistor TP2-1 est relié à la masse par l'intermédiaire de deux résistances en série et la tension VT1 est prélevée au point milieu des deux résistances. De même, le drain du transistor TP2-2 est relié à la masse par l'intermédiaire de deux résistances en série et la tension VT2 est prélevée au point milieu des deux résistances. Le drain du transistor TP2-3 est relié à la masse par l'intermédiaire de deux résistances en série et la tension VT3 est prélevée au point milieu des deux résistances. Le drain du transistor TP2-4 est relié à la masse par l'intermédiaire de deux résistances en série et la tension VT4 est prélevée au point milieu des deux résistances.

Les seuils de détection des températures T1 à T4 sont également liés dans ce mode de réalisation, à moins d'une erreur isolée portant sur la valeur de l'une des résistances, ce cas étant peu probable en pratique, les erreurs de résistivité dues à une dispersion du procédé de fabrication portant généralement sur un ensemble de résistances.

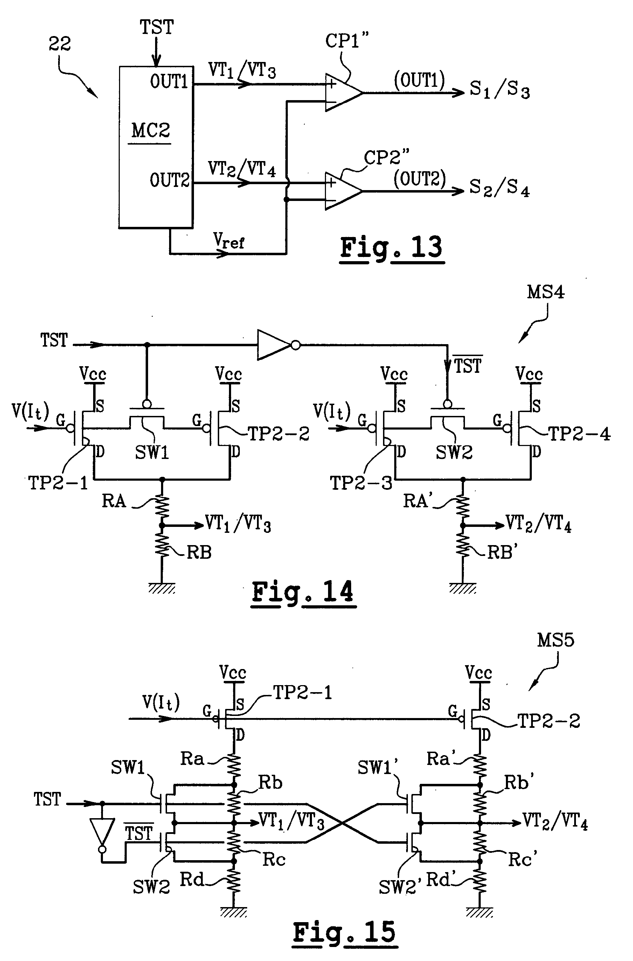

La figure 13 représente un exemple de réalisation d'un capteur de température 22 du type représenté en figure 3, présentant deux sorties OUT1, OUT2 délivrant les signaux Si, S2 ou S3, S4 selon la valeur du signal TST. Le capteur 22 comprend un circuit de mesure MC2 recevant en entrée le signal TST, délivrant sur une sortie OUT1 la tension VT1 ou la tension VT3 selon la valeur du signal TST, délivrant sur une sortie OUT2 la tension VT2 ou la tension VT4 selon la valeur du signal TST, et délivrant également la tension de référence Vref indépendante de la température. La tension VT1/VT3 délivrée par la sortie OUT1 est appliquée sur l'entrée positive d'un comparateur CP1'' dont l'entrée négative reçoit la tension Vref, la sortie du comparateur CP1'' formant la sortie OUT1. La tension VT2/VT4 délivrée par la sortie OUT2 est appliquée sur l'entrée négative d'un comparateur CP2'' dont l'entrée positive reçoit la tension Vref, la sortie du comparateur CP2'' formant la sortie OUT2.

La figure 14 représente un exemple de réalisation d'un étage de mesure MS4 utilisable dans le circuit MC2 pour générer les tensions VT1/VT3 et VT2/VT4. Comme précédemment, l'étage de mesure MS4 est polarisé par une tension V(It) délivrée par un circuit de polarisation (non représenté, Cf. fig. 10). L'étage de mesure MS4 comprend un premier groupe de deux transistors PMOS TP2-1, TP2-2 en parallèle, recevant la tension Vcc sur leurs sources, ayant leurs drains interconnectés et reliés à la masse par deux résistances RA, RB en série. L'étage de mesure MS4 comprend un second groupe de deux transistors PMOS TP2-3, TP2-4 en parallèle, recevant la tension Vcc sur leurs sources, ayant leurs drains interconnectés et reliés à la masse par deux résistances RA', RB' en série. Les transistors TP2-1 et TP-3 reçoivent sur leurs grilles le signal V(It), la grille du transistor TP2-2 reçoit le signal V(It) par l'intermédiaire d'un transistor-interrupteur SW1, et la grille du transistor TP2-4 reçoit le signal V(It) par l'intermédiaire d'un transistor-interrupteur SW2. L'interrupteur SW1 est piloté par le signal TST et l'interrupteur SW2 est piloté par un signal inversé /TST délivré par une porte inverseuse INV1.

Selon la valeur du signal TST, l'interrupteur SW1 est ouvert (transistor SW1 bloqué) et l'interrupteur SW2 fermé (transistor SW2 passant), ou inversement. Lorsque SW1 est ouvert et SW2 fermé, un courant égal à It traverse les résistances RA, RB et un courant égal à 2It traverse les résistances RA', RB'. Le point milieu de résistances RA, RB délivre la tension VT1 et le point milieu des résistances RA', RB' délivre la tension VT2. Lorsque SW1 est fermé et SW2 ouvert, un courant égal à 2It traverse les résistances RA, RB et un courant égal à It traverse les résistances RA', RB'. Le point milieu des résistances RA, RB délivre la tension VT3 et le point milieu des résistances RA', RB' délivre la tension VT4.

La figure 15 représente un autre exemple de réalisation d'un étage de mesure MS5 utilisable dans le circuit de mesure MC2, la génération des tensions VT1/VT3 et VT2/VT4 étant ici basée sur une commutation de résistance au lieu d'une commutation de courant. L'étage de mesure MS5 comprend deux transistors PMOS TP2-1, TP2-2 recevant la tension Vcc sur leurs sources et la tension V(It) sur leurs grilles G. Le drain du transistor TP2-1 est relié à la masse par l'intermédiaire de quatre résistances en série Ra, Rb, Rc, Rd, la cathode de la résistance Rd étant connectée à la masse. Le drain du transistor TP2-2 est relié à la masse par l'intermédiaire de quatre résistances en série Ra', Rb', Rc', Rd', la cathode de la résistance Rd' étant connectée à la masse. Un transistor-interrupteur SW1 piloté par le signal TST est agencé en parallèle avec la résistance Rb, un transistor-interrupteur SW2 piloté par le signal /TST est agencé en parallèle avec la résistance Rc, un transistor-interrupteur SW1' piloté par le signal /TST est agencé en parallèle avec la résistance Rb', et un transistor-interrupteur SW2' piloté par le signal TST est agencé en' parallèle avec la résistance Rc'.

Lorsque les interrupteurs SW1, SW2' sont fermés et les interrupteurs SW2, SW1' ouverts, les résistances Rb, Rc' sont court-circuitées. L'anode de la résistance Rc délivre la tension VT1 et l'anode de la résistance Rc' délivre la tension VT2. Lorsque les interrupteurs SW1, SW2' sont ouverts et les interrupteurs SW2, SW1' fermés, les résistances Ra, Rb' sont court-circuitées. L'anode de la résistance Rc délivre la tension VT3 et l'anode de la résistance Rc' délivre la tension VT4.

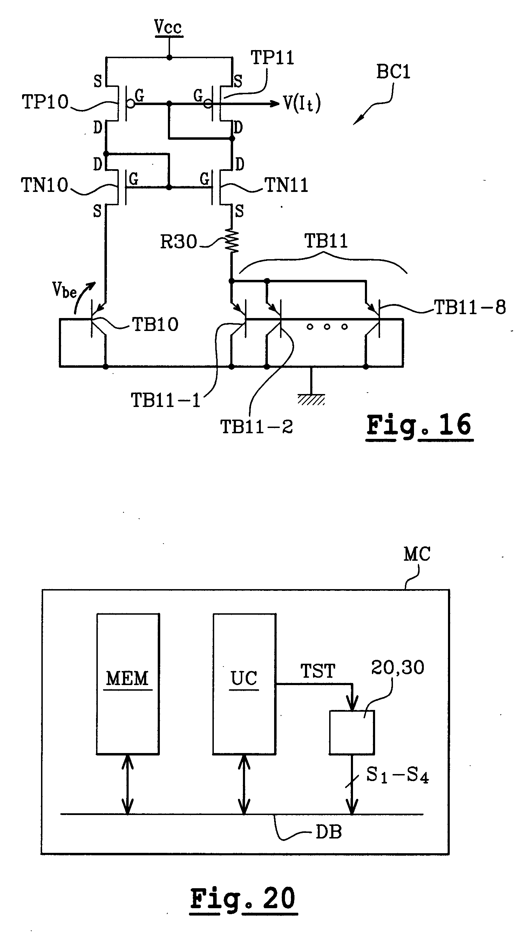

La figure 16 représente un exemple de réalisation du circuit de polarisation BC1 délivrant la tension V(It). Le circuit BC1 comprend deux transistors PMOS TP10 et TP11 en parallèle, recevant la tension Vcc sur leurs sources, les grilles des transistors TP10, TP11 et le drain du transistor TP11 étant interconnectés. Le drain du transistor TP10 est relié au drain d'un transistor NMOS TN10 dont la source est reliée à l'émetteur d'un transistor bipolaire TB10 ayant sa base et son collecteur connectés à la masse. Le drain du transistor- TP11 est relié au drain d'un transistor NMOS TN11 dont la source est reliée à une extrémité d'une résistance R30. Les grilles des transistors TN10, TN11 et le drain du transistor TN10 sont interconnectés. L'autre extrémité de la résistance R30 est reliée à l'émetteur d'un transistor bipolaire TB11 ayant sa base et son collecteur connectés à la masse, le transistor TB11 étant formé ici par 8 transistors identiques TB11-1, TB11-2,...TB11-8. La tension V(It) est prélevée sur les grilles des transistors TP10, TP11.

Dans un tel circuit, les transistors TP10 et TP11 sont agencés en miroirs de courant et sont traversés par le même courant It. Les tensions grille-source des transistors cascode TN10, TN11 sont identiques, les. tensions base-émetteur Vbe des transistors TB10 et TB11 sont identiques, et les courants traversant les transistors TB11-i formant le transistor TB11 sont 8 fois inférieurs au courant It. On en déduit que :

$$It = \alpha\ T$$

avec :

$$\alpha = k/q * ln(8)/r$$

k étant la constante de Boltzmann, q la charge de l'électron, In la fonction logarithme népérien, r la valeur de la résistance R30.

Comme décrit plus haut, la tension de grille V(It) permet d'imposer le courant It dans d'autres parties du capteur afin de générer la tension de référence Vref (tension dite de bandgap) et les tensions VT1, VT2, VT3, VT4 proportionnelles à la température.

Il apparaîtra clairement à l'homme de l'art qu'un capteur de température selon l'invention est susceptible de divers autres modes de réalisation. Notamment, bien que l'on ait décrit dans ce qui précède une détection des seuils de température T1, T2, T3, T4 au moyen de tensions VT1, VT2, VT3, VT4 proportionnelles à la température et d'une tension de référence Vref, un capteur de température selon l'invention peut également utiliser plusieurs tension de référence et une ou plusieurs tensions proportionnelles à la température.

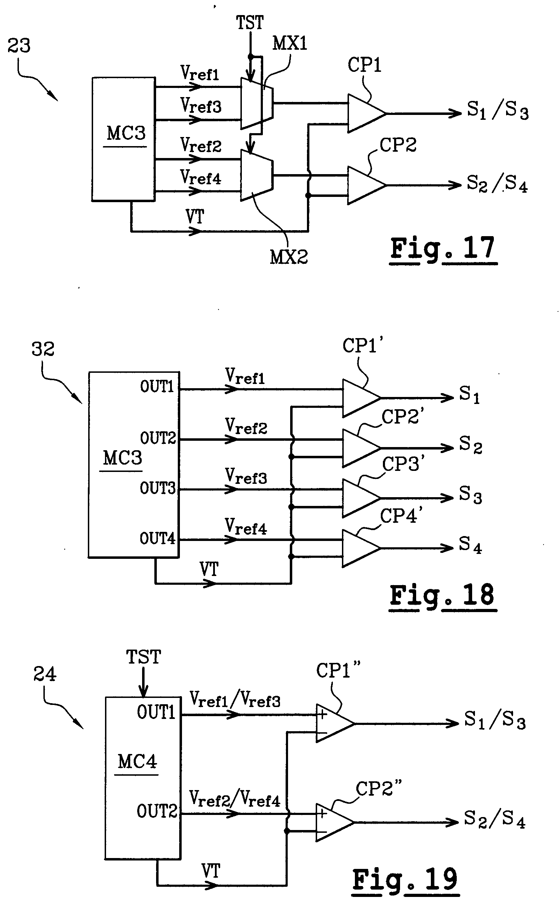

Ainsi, la figure 17 représente un capteur 23 qui présente la même structure que le capteur 21 décrit plus haut en relation avec la figure 8, mais dans lequel le circuit de mesure MC1 est remplacé par un circuit de mesure MC3 qui délivre quatre tensions de référence Vref1, Vref2, Vref3, Vref4 et une tension VT proportionnelle à la température. Les tensions Vref1 et Vref3 sont liées en termes de déviation, les tensions Vref2 et Vref4 sont liées, et les tensions Vref1 et Vref2 sont de préférence liées. Les tensions Vref1, Vref3 sont appliquées sur les entrées du multiplexeur MX1 et les tensions Vref2, Vref4 sont appliquées sur les entrées du multiplexeur MX2. Selon la valeur du signal TST, le comparateur CP1 compare la tension Vref1 ou la tension Vref3 avec la tension VT, et délivre le signal Si ou le signal S3. De même, le comparateur CP2 compare la tension Vref2 ou la tension Vref4 avec la tension VT, et délivre le signal S2 ou le signal S4.

Dans le même esprit, la figure 18 représente un capteur 32 qui présente la même structure que le capteur 31 décrit plus haut en relation avec la figure 9, mais dans lequel le circuit de mesure MC1 est remplacé par le circuit de mesure MC3. Les tensions Vref1, Vref2, Vref3, Vref4 sont appliquées respectivement aux comparateurs CP1', CP2', CP3', CP4', qui reçoivent chacun la tension VT sur leur seconde entrée.

Egalement, la figure 19 représente un capteur 24 qui présente la même structure que le capteur 22 décrit plus haut en relation avec la figure 13, dans lequel un circuit de mesure MC4 remplace le circuit de mesure MC2. Le circuit MC4 délivre sur une sortie OUT1 la tension Vref1 ou la tension Vref3 selon la valeur du signal TST, et sur une sortie OUT2 la tension Vref2 ou la tension Vref4 selon la valeur du signal TST, et délivre également la tension VT. Ainsi, le comparateur CP1" reçoit sur une entrée la tension Vref1 ou la tension Vref3, sur une autre entrée la tension VT, et délivre le signal Si ou le signal S3. Le comparateur CP2" reçoit sur une entrée la tension Vref2 ou la tension Vref4, sur une autre entrée la tension VT, et délivre le signal S2 ou le signal S4. Comme précédemment, les tensions Vref1 et Vref3 sont liées, les tensions Vref2 et Vref4 sont liées, et les tensions Vref1 et Vref2 sont de préférence liées.

D'autre part, bien que l'on ait proposé dans ce qui précède de décaler les deux seuils T1 et T2 pour former les deux seuils décalés T3 et T4, il entre dans le cadre de l'invention de prévoir plusieurs seuils'décalés pour chaque seuil à tester. Par exemple, deux seuils de détection T3 et T5 liés au seuil de détection T1 peuvent être générés, ainsi que deux seuils de détection T4 et T6 liés au seuil de détection T2.

Un capteur de température selon l'invention est également susceptible de diverses applications. A titre d'exemple, la figure 20 représente schématiquement un circuit intégré MC pour carte à puce, comprenant une unité centrale UC à microprocesseur ou à logique câblée, une mémoire MEM, un capteur 20 ou 30 selon l'invention. L'unité centrale UC applique le signal TST au capteur 20, 30 pendant des périodes de test. Les signaux Si à S4 délivrés par le capteur 20, 30 sont accessibles par l'intermédiaire d'un bus de données DB.

**Revendications**

1. Capteur de température intégré (20, 21, 22, 23, 24, 30, 31, 32) délivrant des signaux (Si, S2) de détection de dépassement de seuils de température, comprenant des moyens (MC1-MC4, CP1, CP1', CP1", VT1, Vref, VT, Vref1, MS1-MS5) de détection d'un premier seuil de température (T1) présentant un premier seuil de détection, et des moyens (MC1-MC4, CP2, CP2', CP2", VT2, Vref, VT, Vref2, MS1-MS5) de détection d'un second seuil de température (T2) présentant un second seuil de détection, **caractérisé en ce qu'**il comprend :

   - des moyens (MC1-MC4, MX1, MX2, CP1, CP1", CP3', VT3, Vref, VT, Vref3, MS1-MS5) de détection d'un troisième seuil de température (T3) compris entre les premier (T1) et second (T2) seuils de température, présentant un troisième seuil de détection lié au premier seuil de détection de manière qu'une déviation du premier seuil de détection entraîne une déviation correspondante du troisième seuil de détection,
   - des moyens (MC1-MC4, MX1, MX2, CP2, CP2", CP3', VT4, Vref, VT, Vref4, MS1-MS5) de détection d'un quatrième seuil de température (T4) compris entre les premier (T1) et second (T2) seuils de température, présentant un quatrième seuil de détection lié au second seuil de détection de manière qu'une déviation du second seuil de détection entraîne une déviation correspondante du quatrième seuil de détection,

   les troisième (T3) et quatrième (T4) seuils de température délimitant une fenêtre de températures pour le test du capteur de température en vue de détecter une déviation des premier et second seuils de détection.

2. Capteur de température selon la revendication 1, dans lequel le premier seuil de température (T1) est supérieur au second seuil de température (T2) tandis que le troisième seuil de température (T3) est inférieur au quatrième seuil de température (T4 et fig. 6A, 6B, 7A, 7B).

**3.** Capteur de température selon l'une des revendications 1 et 2, dans lequel le premier seuil de détection est lié au second seuil de détection, de sorte qu'une déviation du premier seuil de détection entraîne une déviation correspondante du second seuil de détection, et réciproquement.

**4.** Capteur de température (21, 22, 31) selon l'une des revendications 1 à 3, comprenant :

- des moyens (MC1, MC2, MS1, MS2, MS3, MS4, MS5) pour délivrer un premier signal (VT1) variant avec la température selon une première loi de variation, un second signal (VT2) variant avec la température selon une seconde loi de variation, un troisième signal (VT3) variant avec la température selon une troisième loi de variation, un quatrième signal (VT4) variant avec la température selon une quatrième loi de variation, de telle manière qu'une déviation du premier signal (VT1) implique une déviation correspondante du troisième signal (VT3) et qu'une déviation du second signal (VT2) implique une déviation correspondante du quatrième signal (VT4),
- des moyens (MC1, MC2, MS1, MS2, MS3, MS4, MS5) pour délivrer au moins un signal de référence (Vref) ne variant pas ou variant peu avec la température, et
- des moyens (CP1-CP2, CP1'-CP4', CP1"-CP2") pour comparer chacun des signaux variant avec la température avec le signal de référence (Vref), et délivrer des signaux (S1-S4, S1/S3, S2/S4) de détection d'un dépassement du premier, second, troisième et quatrième seuils de température.

**5.** Capteur de température (21) selon la revendication 4, comprenant :

- une entrée pour recevoir un signal (TST) de sélection de seuil de détection,
- des moyens (MX1, CP1) pour sélectionner le premier (VT1) ou le troisième (VT3) signal variant avec la température, selon la valeur du signal de sélection (TST), comparer le signal sélectionné avec le signal de référence (Vref) et délivrer un signal (S1/S3) de détection d'un dépassement du premier (T1) ou du troisième (T3) seuil de température, et
- des moyens (MX2, CP2) pour sélectionner le second (VT2) ou le quatrième (VT4) signal variant avec la température, selon la valeur du signal de sélection (TST), comparer le signal sélectionné avec le signal de référence (Vref) et délivrer un signal (S2/S4) de détection d'un dépassement du second (T2) ou du quatrième (T4) seuil de température.

**6.** Capteur de température (22) selon la revendication 4, comprenant :

- une entrée pour recevoir un signal (TST) de sélection de seuil de détection,
- des moyens (MC2, MS4, MS5) pour délivrer le premier (VT1) ou le troisième (VT3) signal variant avec la température, selon la valeur du signal de sélection (TST),
- des moyens (MC2, MS4, MS5) pour délivrer le second (VT2) ou le quatrième (VT4) signal variant avec la température, selon la valeur du signal de sélection (TST),
- des moyens (CP1") pour comparer le signal délivré (VT1/VT3) avec le signal de référence (Vref) et délivrer un signal (S1/S3) de détection d'un dépassement du premier (T1) ou du troisième (T3) seuil de température, et
- des moyens (CP2") pour comparer le signal délivré (VT2/VT4) avec le signal de référence (Vref) et délivrer un signal (S2/S4) de détection d'un dépassement du second (T2) ou du quatrième (T4) seuil de température.

**7.** Capteur de température (23, 24, 32) selon l'une des revendications 1 à 3, comprenant :

- des moyens (MC3, MC4) pour délivrer un premier signal de référence ne variant pas ou variant peu avec la température, un second signal de référence ne variant pas ou variant peu avec la température, un troisième signal de référence ne variant pas ou variant peu avec la température, un quatrième signal de référence ne variant pas ou variant peu avec la température, de telle manière qu'une déviation du premier signal (Vref1) implique une déviation correspondante du troisième signal (Vref3) et qu'une déviation du second signal (Vref2) implique une déviation correspondante du quatrième signal (Vref4),
- des moyens (MC3, MC4) pour délivrer au moins un signal (VT) variant avec la température, et
- des moyens (CP1-CP2, CP1'-CP4', CP1"-CP2") pour comparer chacun des signaux de référence avec le signal variant avec la température (VT), et délivrer des signaux (S1-S4, S1/S3, S2/S4) de détection d'un dépassement du premier, second, troisième et quatrième seuils de température.

**8.** Capteur de température (23) selon la revendication 7, comprenant une entrée pour recevoir un signal (TST) de sélection de seuil de détection, et :

- des moyens (MX1, CP1) pour sélectionner le premier (Vref1) ou le troisième (Vref3) signal de référence, selon la valeur du signal de sélection (TST), comparer le signal sélectionné avec le signal variant avec la température (VT) et délivrer un signal (S1/S3) de détection d'un dépassement du premier (T1) ou du troisième (T3) seuil de température, et

- des moyens (MX2, CP2) pour sélectionner le second (Vref2) ou le quatrième (Vref4) signal de référence, selon la valeur du signal de sélection (TST), comparer le signal sélectionné avec le signal variant avec la température (VT) et délivrer un signal (S2/S4) de détection d'un dépassement du second (T2) ou du quatrième (T4) seuil de température.

9. Capteur de température (24) selon la revendication 7, comprenant une entrée pour recevoir un signal (TST) de sélection de seuil de détection, et :

   - des moyens (MC4) pour délivrer le premier (Vref1) ou le troisième (Vref3) signal de référence, selon la valeur du signal de sélection (TST),
   - des moyens (MC4) pour délivrer le second (Vref2) ou le quatrième (Vref4) signal de référence, selon la valeur du signal de sélection (TST),
   - des moyens (CP1") pour comparer le signal délivré (Vref1/Vref3) avec le signal variant avec la température (VT) et délivrer un signal (S1/S3) de détection d'un dépassement du premier (T1) ou du troisième (T3) seuil de température, et
   - des moyens (CP2") pour comparer le signal délivré (Vref2/Vref4) avec le signal variant avec la température (VT) et délivrer un signal (S2/S4) de détection d'un dépassement du second (T2) ou du quatrième (T4) seuil de température.

10. Capteur de température selon l'une des revendications 1 à 9, dans lequel deux moyens de détection présentent des seuils de détection liés lorsqu'ils présentent au moins un élément électrique commun intervenant dans la détection des seuils de température, tel une source de courant, une résistance électrique ou un transistor.

11. Capteur de température selon l'une des revendications 1 à 10, dans lequel la fenêtre de températures est centrée sur une température (Tt) de l'ordre de 20 à 30°C.

12. Capteur de température selon l'une des revendications 1 à 11, dans lequel le premier seuil de température (T1) est supérieur à 50°C, le second seuil de température (T2) est inférieur à 0°C, et les troisième (T3) et quatrième (T4) seuils de température sont compris entre 0°C et 50°C.

13. Procédé pour tester des seuils de détection d'un capteur de température intégré délivrant des signaux (Si, S2) de détection d'un dépassement d'au moins deux seuils de température (T1, T2), le capteur de température présentant un premier seuil de détection d'un premier seuil de température (T1) et un second seuil de détection d'un second seuil température (T2), **caractérisé en ce qu'**il comprend les étapes consistant à :

   - décaler le premier seuil de détection pour obtenir un troisième seuil de détection d'un troisième seuil de température (T3) compris entre le premier (T1) et le second (T2) seuils de température, de manière que le troisième seuil de détection soit lié au premier seuil de détection et qu'une déviation du premier seuil de détection entraîne une déviation correspondante du troisième seuil de détection,
   - décaler le second seuil de détection pour obtenir un quatrième seuil de détection d'un quatrième seuil de température (T4) compris entre les premier (T1) et second (T2) seuils de température, de manière que le quatrième seuil de détection soit lié au second seuil de détection et qu'une déviation du second seuil de détection entraîne une déviation correspondante du quatrième seuil de détection, et
   - observer des signaux de détection de seuil (S1-S4) délivrés par le capteur de température, en se plaçant dans une fenêtre de températures comprise entre les troisième (T3) et quatrième (T4) seuils de température.

14. Procédé selon la revendication 13, dans lequel le capteur de température est agencé de manière que le premier seuil de température (T1) soit supérieur au second seuil de température (T2) et que le troisième seuil de température (T3) soit inférieur au quatrième seuil de température (T4, fig. 6A, 6B, 7A, 7B).

15. Procédé selon l'une des revendications 13 et 14, dans lequel on lie le premier et le second seuils de détection de manière qu'une déviation du premier seuil de détection entraîne une déviation correspondante du second seuil de détection, et réciproquement.

16. Procédé selon l'une des revendications 13 à 15, dans lequel on teste le capteur de température à une température unique (Tt).

17. Procédé selon l'un des revendications 13 à 16, dans lequel la fenêtre de températures est centrée sur une température (Tt) de l'ordre de 20 à 30°C.

**18.** Procédé selon l'une des revendications 13 à 17, dans lequel le premier seuil de température (T1) est supérieur à 50°C, le second seuil température (T2) est inférieur à 0°C, et les troisième (T3) et quatrième (T4) seuils de température sont compris entre 0°C et 50°C.

**19.** Procédé selon l'une des revendications 13 à 18, dans lequel :

- l'étape consistant à décaler le premier seuil de détection vers le troisième seuil de détection comprend la prévision, dans le capteur de température, de moyens (CP1, CP1', CP1", VT1, Vref, VT, Vref1, MS1-MS5) de détection du premier seuil de température (T1) présentant un premier seuil de détection, et de moyens (CP1, CP1", CP3', VT3, Vref, VT, Vref3, MS1-MS5) de détection du troisième seuil de température (T3) présentant un troisième seuil de détection lié au premier seuil de détection de manière qu'une déviation du premier seuil de détection entraîne une déviation correspondante du troisième seuil de détection, et l'utilisation des moyens de détection du troisième seuil de température pendant le test du capteur de température, et

- l'étape consistant à décaler le second seuil de détection vers le quatrième seuil de détection comprend la prévision, dans le capteur de température, de moyens (CP2, CP2', CP2", VT2, Vref, VT, Vref2, MS1-MS5) de détection du second seuil de température (T2) présentant un second seuil de détection, et de moyens (CP2, CP2", CP3', VT4, Vref, VT, Vref4, MS1-MS5) de détection du quatrième seuil de température (T4) présentant un quatrième seuil de détection lié au second seuil de détection de manière qu'une déviation du second seuil de détection entraîne une déviation correspondante du quatrième seuil de détection, et l'utilisation des moyens de détection du quatrième seuil de température pendant le test du capteur de température.

**20.** Procédé selon la revendication 19, dans lequel on lie les seuils de détection de deux moyens de détection en prévoyant dans les moyens de détection au moins un élément électrique commun intervenant dans la détection des seuils de température, tel une source de courant, une résistance électrique ou un transistor.

**21.** Procédé selon l'une des revendications 19 et 20, dans lequel on prévoit dans le capteur de température deux sorties multiplexées (OUT1, OUT2) pilotées par un signal de sélection de seuil (TST), délivrant respectivement un signal (S1/S3) de détection d'un dépassement du premier seuil ou du troisième seuil, et un signal (S2/S4) de détection d'un dépassement du second seuil ou du quatrième seuil.

**22.** Procédé selon l'une des revendications 13 à 18, dans lequel l'étape consistant à décaler un seuil de détection comprend le fait de modifier la valeur d'au moins un paramètre électrique dans le capteur de température, tel un courant de polarisation ou une résistance électrique.

Fig.1

Fig. 2A

Fig. 2B

Fig. 5A

Fig. 5B

Fig. 6A

Fig. 6B

Fig. 7A

Fig. 7B

TST

OUT1 → $S_1/S_3$

20

OUT2 → $S_2/S_4$

**Fig. 3**

OUT1 → $S_1$

OUT2 → $S_2$

30

OUT3 → $S_3$

OUT4 → $S_4$

**Fig. 4**

21

TST    MX1

MC1

VT$_1$

VT$_3$    VT$_1$/VT$_3$    CP1    (OUT1) → $S_1/S_3$

VT$_2$

VT$_4$    VT$_2$/VT$_4$    CP2    (OUT2) → $S_2/S_4$

$V_{ref}$

MX2    **Fig. 8**

31

MC1

VT$_1$    CP1'    (OUT1) → $S_1$

VT$_2$    CP2'    (OUT2) → $S_2$

VT$_3$    CP3'    (OUT3) → $S_3$

VT$_4$    CP4'    (OUT4) → $S_4$

$V_{ref}$

**Fig. 9**

MC1

Vcc

RS1

Vcc

MS1

Vcc

V($I_t$)

BC1

G | S

D

TP1

Vref

$R_1$

E

B

C

TB1

G | S

TP2

$R_{10}$

VT$_2$

$R_{11}$

VT$_3$

$R_{12}$

VT$_4$

$R_{13}$

VT$_1$

$R_{14}$

**Fig. 10**

MS2

Vcc

V($I_t$)

G | S

TP2-1

D

$R_{20}$

$R_{21}$

VT$_3$

VT$_1$

$R_{22}$

Vcc

G | S

TP2-2

D

$R_{23}$

$R_{24}$

VT$_2$

VT$_4$

$R_{25}$

**Fig. 11**

MS3

TP2-1

TP2-2

TP2-3

Vcc

Vcc

Vcc

Vcc

V($I_t$)

G | S

D

VT$_1$

G | S

D

VT$_3$

G | S

D

VT$_2$

G | S

D

TP2-4

VT$_4$

**Fig. 12**

**Fig. 13**

**Fig. 14**

**Fig. 15**

Fig. 16

Fig. 20

**Fig. 17**

**Fig. 18**

**Fig. 19**

**Office européen des brevets**

**RAPPORT DE RECHERCHE EUROPEENNE**

Numéro de la demande

EP 02 02 8475

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | US 6 288 638 B1 (TANGUAY WILLIAM P ET AL) 11 septembre 2001 (2001-09-11) * colonne 2, ligne 1 - ligne 5; figures * --- | 1,13 | G01K15/00 G01K3/00 |
| A | US 5 993 060 A (SAKURAI YASUHIRO) 30 novembre 1999 (1999-11-30) * abrégé; figures * ----- | 1,13 | |

**DOMAINES TECHNIQUES RECHERCHES (Int.Cl.7)**

G01K

Le présent rapport a été établi pour toutes les revendications

| Lieu de la recherche | Date d'achèvement de la recherche | Examinateur |
|---|---|---|
| LA HAYE | 27 janvier 2003 | Ramboer, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03 82 (P04C02)

**ANNEXE AU RAPPORT DE RECHERCHE EUROPEENNE
RELATIF A LA DEMANDE DE BREVET EUROPEEN NO.** EP 02 02 8475

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

27-01-2003

| Document brevet cité au rapport de recherche | | Date de publication | Membre(s) de la famille de brevet(s) | | Date de publication |
|---|---|---|---|---|---|
| US 6288638 | B1 | 11-09-2001 | AU<br>CA<br>DE<br>GB | 3252500 A<br>2307268 A1<br>10021976 A1<br>2352296 A | 09-11-2000<br>06-11-2000<br>16-11-2000<br>24-01-2001 |
| US 5993060 | A | 30-11-1999 | JP | 10260082 A | 29-09-1998 |

EPO FORM P0460